(19) Europäisches Patentamt
European Patent Office
Office européen des brevets

(11) **EP 1 607 306 B1**

(12) **EUROPÄISCHE PATENTSCHRIFT**

(45) Veröffentlichungstag und Bekanntmachung des Hinweises auf die Patenterteilung:
**29.08.2007   Patentblatt 2007/35**

(51) Int Cl.:
**B62D 6/00** (2006.01)

(21) Anmeldenummer: **05103271.2**

(22) Anmeldetag: **22.04.2005**

(54) **Verfahren und Vorrichtung zur Lenkunterstützung in Untersteuersituationen**

Process and device for steering assist in understeer situations

Procédé et dispositif pour l'assistance de la direction dans situations de sous-virage

(84) Benannte Vertragsstaaten:
**DE FR IT**

(30) Priorität: **19.06.2004   DE 102004029835**

(43) Veröffentlichungstag der Anmeldung:
**21.12.2005   Patentblatt 2005/51**

(73) Patentinhaber: **ROBERT BOSCH GMBH**
**70442 Stuttgart (DE)**

(72) Erfinder:
• **Fausten, Michael**
  **71726 Benningen/N. (DE)**
• **Buettner, Silke**
  **71634 Ludwigsburg (DE)**
• **Kleemann, Ralf**
  **71636 Ludwigsburg (DE)**
• **Lorenz, Stefan**
  **74321 Bietigheim-Bissingen (DE)**

(56) Entgegenhaltungen:
  **EP-A- 1 046 571          WO-A-02/074607**

EP 1 607 306 B1

**Beschreibung**

Stand der Technik

Die Erfindung betrifft ein Verfahren zur Stabilisierung eines Fahrzeugs in einem untersteuernden Fahrzustand.

Zur Erhöhung der Sicherheit im Fahrzeug existieren heutzutage aktive Sicherheitssysteme, die durch gezielte Bremseingriffe, die Fahrstabilität in kritischen Fahrsituationen erhöhen. Dabei werden die Längs- und Seitenkräfte an den Rädern so geändert, dass sich ein stabilisierendes Giermoment um die Hochachse aufbaut. Solch ein stabilisierendes Giermoment kann auch durch der Fahrsituation angepasstes Lenken aufgebaut werden. Basierend auf dieser Tatsache existiert seit kurzem eine aktive Lenkung, die an der Stabilitätsgrenze durch Stellung eines Zusatzlenkwinkels über ein Schneckengetriebe an den Rädern die Lenkbewegung des Fahrers korrigierend unterstützt.

Eine weitere aktive Lenkung ist die elektrische Servolenkung. Bei dieser wird das vom Fahrer auf die Lenkung gebrachte Lenkmoment gemessen, ausgewertet und von einem Elektromotor ein entsprechendes Unterstützungsmoment über ein Schneckengetriebe auf die Zahnstange aufgebracht.

Durch gezielte Ansteuerung dieses Elektromotors hat man die Möglichkeit ein vom Fahrer unabhängiges Moment auf die Lenkung zu geben. Dieser nimmt diese Momentenaufschaltung im Lenkrad wahr. Bewegt der Fahrer das Lenkrad entgegen dem aufgebrachten Moment, muss er mehr Kraft aufbringen, das Lenkrad zu drehen. Im entgegengesetzten Fall unterstützt das aufgeschaltete Moment die Bewegung des Fahrers.

Darauf basierend existieren bereits verschiedene Komfortfunktionen wie z.B. eine geschwindigkeitsabhängige Lenkunterstützung oder eine Geradeauslaufkorrektur.

Vorteile der Erfindung

Die Erfindung betrifft ein Verfahren zur Stabilisierung eines Fahrzeugs in einem untersteuernden Fahrzustand, bei dem

- ein Ziellenkwinkel ermittelt wird,
- bei einer Lenkbewegung des Fahrers, welche die Differenz zwischen dem aktuellen Lenkwinkel und dem Ziellenkwinkel vergrößert, ein mit zunehmender Differenz größer werdendes Unterstützungsdrehmoment bzw. Unterstützungsmoment bzw. fahrerunabhängiges Lenkmoment auf das Lenkrad aufgebracht wird,
- bei einer Lenkbewegung des Fahrers, welche die Differenz zwischen dem aktuellen Lenkwinkel und dem Ziellenkwinkel verringert, ein mit abnehmender Differenz kleiner werdendes Unterstützungsdrehmoment auf das Lenkrad aufgebracht wird,
- wobei das Unterstützungsdrehmoment dem Lenkrad eine Drehrichtung vorgibt und
- wobei bei einer Drehbewegung des Lenkrads durch den Fahrer in Richtung der vorgegebenen Drehrichtung der Lenkwinkel dem Ziellenkwinkel angenähert wird.

Das Unterstützungsdrehmoment dreht das Lenkrad (und damit auch die Räder) selbsttätig, selbst wenn der Fahrer kein Moment auf das Lenkrad ausübt bzw. das Lenkrad loslässt. Je nach relativer Drehrichtung der Lenkbewegung des Fahrers und des Unterstützungsdrehmoments erleichtert oder erschwert das Unterstützungsdrehmoment die Lenkbewegung des Fahrers. Dadurch wird das "Lenkgefühl" des Fahrers beeinflusst.

Dadurch ist eine Führung des Fahrers zum richtigen Lenkwinkel hin möglich. Durch eine Begrenzung des maximal möglichen Unterstützungsmoments und durch die Detektion auf Fahrergegenwehr soll eine Bevormundung des Fahrers ausgeschlossen werden.

Eine vorteilhafte Ausgestaltung der Erfmdung ist dadurch gekennzeichnet, dass es sich

- bei dem Lenkwinkel um den Radlenkwinkel handelt und
- bei dem Ziellenkwinkel um den Zielradlenkwinkel bzw. einen Zielwert für den Radlenkwinkel handelt.

Diese Lenkwinkel sind deshalb besonders relevant, weil sie die Fahrdynamik direkt beeinflussen.

Eine vorteilhafte Ausgestaltung der Erfmdung ist dadurch gekennzeichnet, dass der Lenkwinkel und der Ziellenkwinkel jeweils auf die Vorderräder bezogen sind.

Eine vorteilhafte Ausgestaltung der Erfindung ist dadurch gekennzeichnet, dass der Ziellenkwinkel wenigstens aus der Fahrzeuggeschwindigkeit und der Giergeschwindigkeit ermittelt wird. Die Fahrzeuggeschwindigkeit wird in allen Fahrzeugen ermittelt, die Giergeschwindigkeit steht im Rahmen einer Fahrdynamikregelung in zahlreichen modernen Fahrzeugen serienmäßig zur Verfügung. Deshalb ist für diese Ausgestaltung kein wesentlicher Zusatzaufwand notwendig.

Eine vorteilhafte Ausgestaltung der Erfindung ist dadurch gekennzeichnet, dass der Ziellenkwinkel anhand der

Beziehung

$$\delta = \frac{\left(\left(\dfrac{v}{v_{char}}\right)^2 + 1\right)\cdot \dot{\psi}\cdot l}{v}$$

ermittelt wird, wobei $\dot{\psi}$ die aktuelle Gierrate, $v$ die aktuelle Geschwindigkeit, $v_{char}$ die charakteristische Geschwindigkeit und $l$ der Radstand des Fahrzeugs sind. Diese Beziehung ist mathematisch im Steuergerät einfach auszuwerten, da es sich hierbei um eine explizite Berechnungsvorschrift für den Ziellenkwinkel handelt.

Eine vorteilhafte Ausgestaltung der Erfindung ist dadurch gekennzeichnet, dass eine Aktivierung des Verfahrens dann stattfindet, wenn

- ein untersteuernder Fahrzustand des Fahrzeugs festgestellt wird und
- der Fahrer das Lenkrad derart dreht, dass eine Vergrößerung des Lenkwinkels stattfindet. Damit werden unnötige Aktivierungen vermieden.

Eine vorteilhafte Ausgestaltung der Erfindung ist dadurch gekennzeichnet,

- dass das Unterstützungsdrehmoment zum Zeitpunkt der Aktivierung des Verfahrens Null ist und
- dass für den Fall, dass durch die Lenkbewegung des Fahrers die Differenz zwischen dem aktuellen Lenkwinkel und dem Ziellenkwinkel vergrößert wird, das Unterstützungsdrehmoment mit zunehmender Differenz zwischen dem aktuellen Lenkwinkel und dem zum Zeitpunkt der Aktivierung des Verfahrens vorliegenden Lenkwinkel anwächst.

Dadurch wird ein um so stärkeres Unterstützungsdrehmoment, welches der Lenkbewegung des Fahrers entgegenwirkt, hervorgerufen, je weiter der Fahrer in die falsche Richtung lenkt.

Eine vorteilhafte Ausgestaltung der Erfindung ist dadurch gekennzeichnet, dass das Unterstützungsdrehmoment proportional zur Differenz zwischen dem aktuellen Lenkwinkel und dem zum Zeitpunkt der Aktivierung des Verfahrens vorliegenden Lenkwinkel anwächst. Dadurch kann die Größe des Unterstützungsdrehmomentes auf einfache Art und Weise ermittelt werden (weil es sich um eine lineare Funktion handelt).

Eine vorteilhafte Ausgestaltung der Erfindung ist dadurch gekennzeichnet, dass für den Fall, dass beginnend mit dem Zeitpunkt der Aktivierung des Verfahrens

- in einem ersten Zeitintervall durch die Lenkbewegung des Fahrers die Differenz zwischen dem aktuellen Lenkwinkel und dem Ziellenkwinkel vergrößert wird,
- anschließend in einem zweiten Zeitintervall durch die Lenkbewegung des Fahrers die Lenkrichtung geändert wird und die Differenz zwischen dem aktuellen Lenkwinkel und dem Ziellenkwinkel verkleinert wird,

das im ersten Zeitintervall aufgebaute Unterstützungsdrehmoment im zweiten Zeitintervall abhängig von der Differenz zwischen dem aktuellen Lenkwinkel und dem Ziellenkwinkel derart verringert wird, dass bei Erreichen des Ziellenkwinkels das Unterstützungsdrehmoment verschwindet. Dadurch wird sichergestellt, dass bei Vorliegen des Ziellenkwinkels kein Unterstützungsmoment mehr vorhanden ist.

Eine vorteilhafte Ausgestaltung der Erfindung ist dadurch gekennzeichnet, dass die Verringerung des Unterstützungsdrehmoments im zweiten Zeitintervall derart erfolgt, dass das Unterstützungsdrehmoment proportional zur Differenz zwischen dem aktuellen Lenkwinkel und dem Ziellenkwinkel abnimmt. Der hier vorgeschlagene lineare Zusammenhang zwischen Drehmoment und Lenkwinkel ist in einem Steuergerät besonders einfach zu implementieren.

Eine vorteilhafte Ausgestaltung der Erfindung ist dadurch gekennzeichnet, dass eine Deaktivierung des Verfahrens dann stattfindet, wenn der Fahrer das Lenkrad während eines Zeitintervalls vorgegebener Länge entgegen der durch das Unterstützungsdrehmoment vorgegebenen Drehrichtung dreht. Aus dem Zeitkriterium kann geschlossen werden, dass der Fahrer der Assistenzfunktion bewusst nicht folgen will. Durch die Deaktivierung wird eine Überstimmung des Fahrerwunsches verhindert.

Eine vorteilhafte Ausgestaltung der Erfindung ist dadurch gekennzeichnet, dass bei einer Deaktivierung des Verfahrens das bis zum Zeitpunkt der Deaktivierung aufgebaute Unterstützungsmoment derart abgebaut wird, dass sowohl der zeitliche Momentenverlauf als auch der zeitliche Verlauf der Momentenänderung pro Zeiteinheit stetige Funktionen der Zeit sind. Dadurch wird das Lenkgefühl für den Fahrer verbessert.

Weiterhin umfasst die Erfindung eine Vorrichtung zur Durchführung des erfindungsgemäßen Verfahrens.

Die vorteilhaften Ausgestaltungen des erfindungsgemäßen Verfahrens äußern sich selbstverständlich auch als vorteilhafte Ausgestaltungen der erfindungsgemäßen Vorrichtung und umgekehrt.

Zeichnung

Die Zeichnung besteht aus den Figuren 1 bis 7.

In Fig. 1 ist die erfindungsgemäßen Funktionalität in Form eines Zustandsautomaten dargestellt.

In Fig. 2 ist der Verlauf einer Lenkunterstützung, welche zur Stabilisierung des Fahrzeugs führt, dargestellt.

In Fig. 3 ist eine Rücknahmekurve für den Gradienten des auf das Lenkrad aufgebrachten Moments im Falle einer Nichtakzeptanz der Lenkunterstützung durch den Fahrer dargestellt.

In Fig. 4 ist der zeitliche Verlauf der Rücknahme des auf das Lenkrad aufgebrachten Moments im Falle einer Nichtakzeptanz der Lenkunterstützung durch den Fahrer dargestellt.

In Fig. 5 ist der Verlauf einer Lenkunterstützung, welche zur Stabilisierung des Fahrzeugs führt, dargestellt. Dabei erfolgt jedoch zwischendurch eine Fehlreaktion des Fahrers.

In Fig. 6 ist der Ablauf des erfindungsgemäßen Verfahrens dargestellt.

In Fig. 7 ist der Aufbau der erfindungsgemäßen Vorrichtung dargestellt.

Ausführungsbeispiele

Beim Untersteuern ist die aktuelle Giergeschwindigkeit des Fahrzeugs geringer als die vom Fahrer über die Lenkung (und die Fahrzeuggeschwindigkeit) geforderte Giergeschwindigkeit. Ursache ist, dass der Fahrer die Lenkung zu weit zuzieht, d.h. den Lenkwinkel vergrößert, und dass somit über die Vorderreifen die geforderten Kräfte nicht auf die Straße übertragen werden können. Als Folge schiebt das Fahrzeug über die Vorderachse nach Kurvenaußen, d.h. in die kurvenäußere Richtung.

Die Untersteuerfunktionalität soll den Servomotor der Lenkung so ansteuern, dass dem Fahrer geholfen wird, in untersteuernden Fahrsituationen das Fahrzeug zu stabilisieren. Dazu wird ein Moment auf die Lenkung gegeben, das den Fahrer motivieren soll, die Lenkung zu öffnen, d.h. den Lenkwinkel zu verkleinern. Dadurch erreicht man einen besseren Kontakt der Reifen mit der Fahrbahnoberfläche und somit eine günstigere Kraftwirkungsrichtung der Vorderräder. Die auf die Fahrbahn übertragene Kräfte sind höher und eine bessere Kurvenführung ist möglich.

Die Momentenaufschaltung unterstützt den Fahrer in einer kritischen Untersteuersituation. Folgt der Fahrer den Hinweisen, die er über die Momentenunterstützung erhält, wird eine Stabilisierung des Fahrzeugs und eine bessere Kurvenführung erreicht. Dies ist besonders hilfreich für ungeübte Fahrer, die meist intuitiv die Lenkung weiter zuziehen (d.h. den Lenkwinkel vergrößern), was zu einer Verschlechterung der Fahrsituation führt.

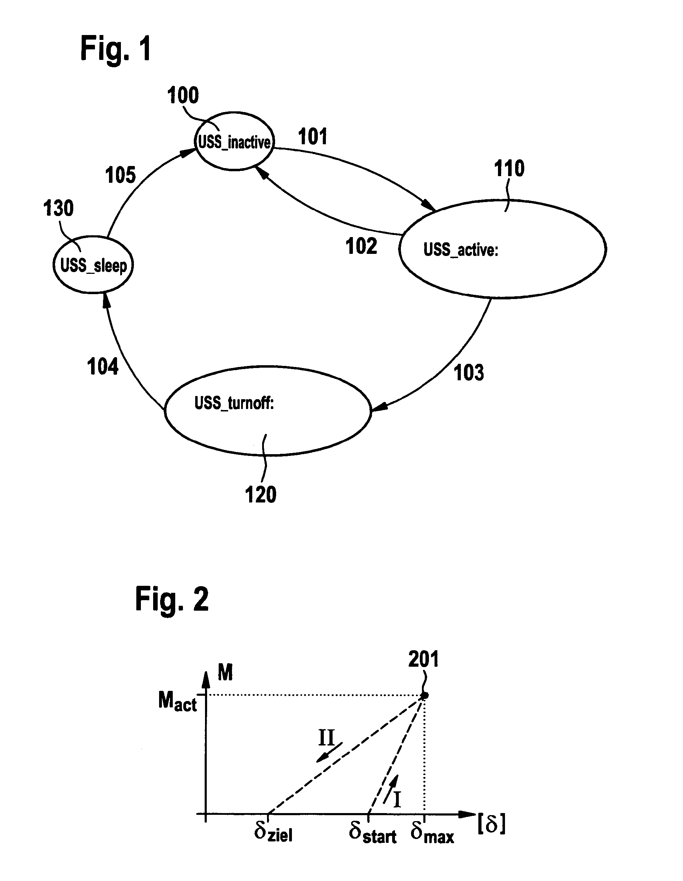

Dabei verteilt sich die Funktionalität der Lenkunterstützung auf verschiedene Zustände eines Zustandsautomaten. Dies ermöglicht eine Unterstützung in den kritischen Fahrsituationen, aber auch ein Eingehen auf das Verhalten und die Reaktion des Fahrers auf die Momentenaufschaltung. So kann eine optimale Unterstützung erfolgen und zur gleichen Zeit ist gewährleistet, dass der Fahrer die volle Kontrolle über die Lenkung und somit das Fahrzeug besitzt und nicht von der Momentenaufschaltung überstimmt wird. Diese Funktionalität ist in dem in Fig. 1 dargestellten Zustandsautomaten abgebildet.

Der Start- bzw. Ausgangszustand besteht in dem mit USS_inactive bezeichneten Block 100. In diesem Zustand der Untersteuerlenkassistenzfunktion wird kontinuierlich der Fahrzeugzustand überwacht. Dazu wird die Untersteuertendenz des Fahrzeugs betrachtet. Kommt das Fahrzeug in eine kritische Untersteuersituation und ist zu Erkennen, dass der Fahrer, die Lenkung immer weiter zuzieht, wird die Funktion aktiviert und springt gemäß dem Übergang 101 in den Zustand mit USS_active bezeichneten Zustand 110. Der zu diesem Zeitpunkt eingestellte Lenkwinkel ist der Startlenkwinkel $\delta_{start}$.

Im diesem aktiven Zustand wird das zum Stabilisieren notwendige Moment berechnet. Es ist proportional zum Lenkwinkel und vergrößert sich, wenn der Betrag des Lenkwinkels sich vergrößert, d.h. wenn der Fahrer fälschlicherweise die Lenkung immer weiter zuzieht und somit das Untersteuern zunimmt, und nimmt ab, wenn der Betrag des Lenkwinkels kleiner wird, d.h. wenn der Fahrer die erwünschte Handlung ausführt, also die Lenkung öffnet und sich folglich das Fahrzeug stabilisiert. In diesem Zustand gibt es zwei Möglichkeiten:

- Es wird eine Akzeptanz dieser Assistenzfunktion bzw. Lenkunterstützung durch den Fahrer erkannt. Der Zustandsautomat bleibt im Zustand USS_active, bis eine Stabilisierung des Fahrzeug erkannt wird. Dann erfolgt über 102 ein Rücksprung des Zustandsautomaten in den Zustand 100 ("USS_inactive").

- erkennt die Funktion über ein beliebiges geeignetes Verfahren, dass der Fahrer dem Vorschlag der Assistenzfunktion nicht nachkommt, geht die Funktion über 103 in den mit 120 Zustand USS_turnoff über. In diesem Modus wird das aufgeschaltete Moment unabhängig von der momentanen Fahrsituation in geeigneter Weise weggenommen. Das Erkennen, dass der Fahrer dem Vorschlag der Assistenzfunktion nicht nachkommt, kann beispielsweise über das Ablaufen eines Timers (d.h. das Verstreichen eines Zeitintervalls vorgegebener Länge) oder über die Feststellung einer Fahrergegenwehr erfolgen.

Hat das Moment in Block 120 den Wert Null erreicht, wird über 104 in den mit 130 bezeichneten Zustand USS_ sleep übergegangen.

Dieser Zustand garantiert, dass ein erneutes Eingriffen der Funktion erst bei einem neuen Untersteuern eintritt. Dies wird dadurch erreicht, dass erst dann über 105 in den mit 100 bezeichneten inaktiven Zustand USS_inactive übergegangen wird, wenn keine fahrkritische Untersteuertendenz des Fahrzeuges mehr erkennbar ist.

Im folgenden werden die beiden Fälle, dass bei einem vorliegenden untersteuernden Fahrzustand der Fahrer fälschlicherweise die Lenkung weiter zu zuzieht (Fall 1) und dass der Fahrer richtigerweise die Lenkung öffnet (Fall 2) betrachtet. In Fig. 2 ist dazu in Abszissenrichtung der Betrag $|\delta|$ (als $[\delta]$ in Fig. 2 bezeichnet) des Lenkwinkels $\delta$ und in Ordinatenrichtung das auf das Lenkrad aufgeschaltete Moment M dargestellt. Dieses aufgeschaltete Moment muss beim Lenkvorgang durch den Fahrer überwunden werden. Wenn der Fahrer in die richtige Richtung lenkt, vermittelt das Lenkrad dem Fahrer ein zunehmend leichtgängigeres Lenkgefühl. Lenkt der Fahrer dagegen in die falsche Richtung, wird dem Fahrer über das auf das Lenkrad aufgebrachte Gegenmoment M ein zunehmend schwergängigeres Lenkgefühl vermittelt. Die Größe $|\delta|$ wird im folgenden als $\delta_{act\_abs}$ bezeichnet.

Fall 1: Berechnung des Moments beim Zuziehen der Lenkung:

Ein Zuziehen der Lenkung wird festgestellt, wenn der Betrag des aktuellen Lenkwinkels größer ist als der aus dem letzten Berechnungsschritt (Bedingung I). In diesem Fall befindet man sich in Fig. 2 auf der Momentengeraden I. Dabei kennzeichnet $\delta_{start}$ den zu Beginn des Zustand USS_active vorliegenden Lenkwinkel.
Durch die die Gerade I beschreibende Funktion

$$M(\delta_{act\_abs}) = m * (\delta_{act\_abs} - \delta_{start}) + a$$

wird das Moment $M(\delta_{act\_abs})$ berechnet. $\delta_{act\_abs}$ ist der momentan vorliegende Lenkwinkel. Die Steigung m dieser Geraden ist ein applizierbarer Parameter. Der Achsenabschnitt a ist festgelegt durch

$$a = M(k-1) - m*(\delta_{act\_abs}(k-1) - \delta_{start})$$

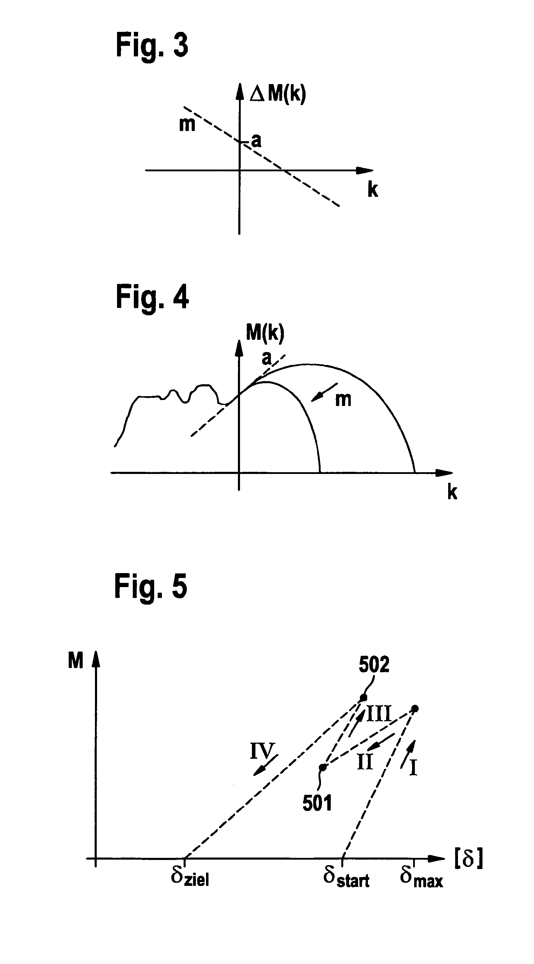

und wird dann berechnet, wenn Bedingung (I) im aktiven Zustand von FALSE auf TRUE wechselt, d.h. wenn der Betrag des aktuellen Lenkwinkels größer ist als der aus dem letzten Berechnungsschritt. Dabei ist M(k-1) das Moment des letzten Berechnungsschritts und $\delta_{act\_abs}(k-1)$ der Betrag des Lenkwinkels des letzten Berechnungsschritts. Hierbei ist zu bemerken, dass in dem in Fig. 2 dargestellten Fall a = 0 ist. Ein von Null verschiedener Wert von a stellt sich in dem in Fig. 5 dargestellten Fall ein. Darauf wird später näher eingegangen.

Fall 2: Berechnung des Moments beim Öffnen der Lenkung:

Beim Lenkwinkel $\delta_{max}$ fmde ein Öffnen der Lenkung statt, d.h. der Fahrer verkleinert den Lenkwinkel. Hierzu ist zu bemerken, dass $\delta_{max}$ kein fest vorgegebener Lenkwinkel ist, sondern dass es sich bei $\delta_{max}$ um denjenigen Punkt handelt, an welchem der Fahrer seinen Irrtum bemerkt und den Lenkwinkel richtigerweise wieder verkleinert. Zu diesem Zeitpunkt hat das auf das Lenkrad aufgeschaltete Moment M den Wert $M_{act}$ erreicht, auch hier ist $M_{act}$ wieder keine fest vorgegebene Größe. Bei diesem Öffnen der Lenkung, d.h. wenn der Betrag des aktuellen Lenkwinkels kleiner ist als der aus dem letzten Berechnungsschritt (Bedingung II), wird der Momentenverlauf nun durch Gerade II dargestellt:

$$M(\delta_{act\_abs}) = m * (\delta_{act\_abs} - \delta_{ziel}) .$$

Der Ziellenkwinkel $\delta_{ziel}$ wird mit einem beliebigen geeigneten Verfahren aus den aktuellen fahrdynamischen Messwerten und Modellgrößen geschätzt. Eine Möglichkeit zur Ermittlung der Größe $\delta_{ziel}$ anhand der inversen Ackermann-Beziehung wird später vorgestellt.

Wechselt Bedingung II von FALSE auf TRUE (dies ist ab dem Umkehrpunkt 201 in Fig. 2 der Fall, d.h. der Fahrer verkleinert den Lenkwinkel wieder), muss für Kurve II die Steigung m ausgerechnet werden. Diese erhält man über

$$m = M(k-1)/( \delta_{act\_abs}(k)- \delta_{ziel}) .$$

Dabei ist $\delta_{act\_abs}(k)$ der aktuelle Lenkwinkel und $\delta_{ziel}$ der Ziellenkwinkel. M(k-1) ist das Moment des letzten Berechnungsschritts.

Hat der Fahrer die Lenkung bis zum Lenkwinkel $\delta_{ziel}$ geöffnet, wird wieder in den Zustand USS_inactive geschaltet.

In Fig. 5 ist ein komplizierterer Fall als in Fig. 2 dargestellt. Bei diesem Fall kommt der Fahrer wie in Fig. 2 nach einer gewissen Zeit der Lenkunterstützung nach. Jedoch weicht der Fahrer erneut von der Lenkunterstützung ab, noch bevor der Ziellenkwinkel $\delta_{ziel}$ erreicht ist. Nach einem weiteren Zeitintervall kommt er der Lenkunterstützung erneut nach und erreicht, dieser folgend, den Ziellenkwinkel $\delta_{ziel}$.

Der in Fig. 5 dargestellte Fall lässt sich in die folgenden Schritte untergliedern:

- Schritt 1: Fahrer zieht Lenkung entsprechend Gerade I weiter zu, d.h. vergrößert den Lenkwinkel. Die Gerade I weist (entsprechend den Ausführungen zu Fig. 2) den Parameter a = 0 auf.
- Schritt 2: Mit dem Erreichen des Lenkwinkels $\delta_{max}$ hat sich ein derart großes Gegenmoment M aufgebaut, dass der Fahrer seinen Irrtum erkennt und entlang der Geraden II den Lenkwinkel jetzt richtigerweise wieder verkleinert.
- Schritt 3: An dem mit 501 bezeichneten Punkt vergrößert der Fahrer den Lenkwinkel fälschlicherweise wieder, das Moment folgt nun der mit III bezeichneten Geraden. Diese Gerade III weist dieselbe Steigung wie die Gerade I auf, hat im Unterschied zur Geraden I jedoch einen von Null verschiedenen Achsenabschnitt a.
- Schritt 4: Bei Erreichen des Punkte 502 erkennt der Fahrer erneut seinen Irrtum und verkleinert entlang der Geraden IV seinen Lenkwinkel, bis der Ziellenkwinkel $\delta_{ziel}$ erreicht ist.

Erkennt die Funktion über ein beliebig geeignetes Verfahren, dass der Fahrer dem Vorschlag der Assistenzfunktion nicht nachkommt, geht die Funktion in den Zustand USS_turnoff über.

In diesem Modus wird das aufgeschaltete Moment, unabhängig von der momentanen Fahrsituation in geeigneter Weise weggenommen.

Hat das Moment daraufhin den Wert Null erreicht, wird in den Zustand USS_sleep übergegangen.

Dieser Zustand garantiert, dass ein erneutes Eingriffen der Funktion erst bei einem neuen Untersteuern eintritt. Dies wird dadurch erreicht, dass erst dann in den inaktiven Zustand USS_inactive übergegangen wird, wenn keine fahrkritische Untersteuertendenz des Fahrzeuges mehr erkennbar ist.

Dabei kann bei einer Überlagerungslenkung ein Zusatzlenkwinkel den Einschlag der Räder minimieren, bei einer elektrischen Servolenkung kann ein auf das Lenkrad aufgebrachtes Drehmoment dem Fahrer den Hinweis geben, den Lenkwinkel zu verkleinern. Die inverse Ackermann-Gleichung kann zur Vorgabe des Lenkwinkels $\delta_{ziel}$ verwendet werden, bis zu dem die Lenkung aufgemacht werden muss, um den kritischen Fahrzustand zu verlassen.

Die inverse Ackermann-Gleichung liefert aus der aktuellen Gierrate den Lenkwinkel, bei dem die Reifen einen besseren Kontakt mit der Fahrbahnoberfläche und somit eine günstigere Kraftwirkungsrichtung der Vorderräder besitzen. Dadurch werden die auf die Fahrbahn übertragene Kräfte vergrößert und eine bessere Kurvenführung ist möglich, was zu einer Stabilisierung des Untersteuerns führt.

Die Ackermann-Gleichung (Einspurmodell) und stellt einen Zusammenhang zwischen der Gierrate und dem Lenkwinkel dar:

$$\dot{\psi} = \frac{1}{\left( \left( v \middle/ v_{char} \right)^2 +1 \right)} \cdot \frac{v \cdot \delta}{l}$$

Stellt man diese nach dem Lenkwinkel $\delta$ um, so erhält man die inverse AckermannGleichung:

$$\delta = \frac{\left(\left(\dfrac{v}{v_{char}}\right)^2 + 1\right) \cdot \dot\psi \cdot l}{v}$$

Diese Gleichung liefert, wenn man für $\dot\psi$ die aktuelle Gierrate, für $v$ die aktuelle Geschwindigkeit, für $v_{char}$ die charakteristische Geschwindigkeit und für $l$ den Radstand des Fahrzeugs einsetzt, einen Lenkwinkel, bei dem das Fahrzeug den kritischen Zustand verlassen hat. Dieser Wert ist daher als Abbruchkriterium (z. B. als sogenannten Ziellenkwinkel $\delta_{ziel}$) für aktive Lenkungen geeignet.

Im Vergleich zur Überlagerungslenkung bestehen bei der elektrischen Servolenkung zwei erhebliche Unterschiede. Zum einen kann bei der elektrischen Servolenkung aus dem Lenkradwinkel nicht mehr direkt der Fahrersollkurs abgelesen werden (denn aufgeschaltete Momente bewirken eine Winkeländerung des Lenkrads) und zum anderen spürt der Fahrer die Momenteneingriffe im Lenkrad und reagiert darauf auf unterschiedliche und nicht vorhersehbare Weise.

Deshalb wird ein Verfahren vorgestellt, welches bei Nichtakzeptanz der Lenkunterstützung seitens des Fahrers, die Momentenunterstützung wegnimmt.

Der zeitliche Verlauf der Momentenwegnahme ist eine Polynom-Funktion zweiter Ordnung, d.h. das Moment M wird entsprechend einer Parabelfunktion reduziert. Im Vergleich zu z.B. einer sprunghaften oder linearen Momentenwegnahme verbessert sich das Lenkgefühl für den Fahrer, da keine Momentensprünge sowie keine Sprünge im Momentengradienten auftreten.

Im zeitlichen Momentenverlauf und in dessen Ableitung sollen keine Sprünge auftreten. Dies wird erreicht, indem der Gradient $\Delta M(k)$ sich linear ändert (siehe Fig. 3). Hier und im folgenden ist zu bemerken, dass unter dem Gradienten häufig und im exakten Sinne eine Größe $\Delta M(k)/\Delta t$ verstanden wird. Dabei ist t die Zeitvariable, d.h. der Gradient gibt die Änderung des Moments pro Zeiteinheit an. Im vorliegenden Ausführungsbeispiel sei der Wert von $\Delta t$ jedoch konstant, z.B. $\Delta t = 10$ Millisekunden. Das bedeutet, dass der Wert des Lenkwinkels alle 10 Millisekunden ermittelt wird. Unter dieser Voraussetzung $\Delta t = $ const. kann auch die Größe $\Delta M(k)$ als Gradient bezeichnet werden, denn $\Delta M(k)$ ist proportional zu $\Delta M(k)/\Delta t$ . Dadurch erhöht sich die Übersichtlichkeit der folgenden Formeln. In Fig. 3 ist in Abszissenrichtung der Abtastschritt k dargestellt. Der Wert k ist proportional zur Zeit t. In Ordinatenrichtung ist der Gradient $\Delta M(k)$ dargestellt.

Dabei ist a die Steigung des Moments im letzten Berechnungsschritt. m gibt an, wie schnell das Moment weggenommen wird. Man beachte, dass m < 0 sein muss, um ein Verringern des Moments zu erreichen.

Der sich ergebende zeitliche Verlauf ist beispielhaft in der später näher erläuterten Fig. 4 dargestellt. Dabei berechnet sich das Moment M zum Zeitpunkt k+1 aus der rekursiven Gleichung:

$$M(k+1) = M(k) + \Delta M(k+1) = M(k) + m{*}(k+1) + a \,.$$

Dabei wurde berücksichtigt, dass der in Fig. 3 dargestellte Verlauf durch die Funktion $\Delta M(k) = m{*}k + a$ gegeben ist.

In Fig. 4 ist in Abszissenrichtung die Nummer k des Abtastschrittes (dies entspricht der Zeit) und in Ordinatenrichtung das Moment M(k) aufgetragen. Auf der linken Seite von Fig. 4 (k < 0) wird der Fall betrachtet, dass eine Unterstützung des Fahrers durch das Aufbringen des Lenkmoments erfolgt. Zum Zeitpunkt k = 0 wird die Nichtakzeptanz der Lenkunterstützung durch den Fahrer festgestellt. Deshalb erfolgt für k > 0 eine Rücknahme von M entsprechend einem parabolischen Verlauf. Dabei sind beispielhaft zwei Rücknahmekurven für 2 unterschiedliche Werte des Parameters m dargestellt. Zur Vermeidung von Sprüngen im Momentengradienten ist in beiden eingezeichneten Fällen stets eine vorübergehende Erhöhung von M notwendig, bevor die Rücknahme beginnt.

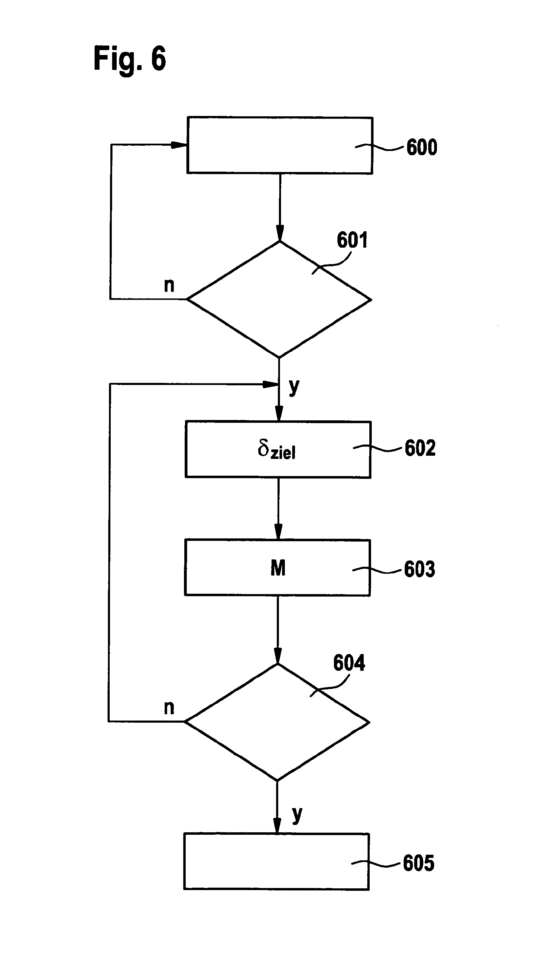

Der Ablauf des erfindungsgemäßen Verfahrens ist in Fig. 6 dargestellt. Nach dem Start in Block 600 wird in Block 601 ermittelt, ob ein untersteuernder Fahrzustand vorliegt und der Fahrer das Lenkrad in die falsche Richtung dreht. Lautet die Antwort "Nein" (in Fig. 6 stets mit "n " bezeichnet), dann wird zu Block 600 zurückverzweigt. Lautet die Antwort dagegen "y", dann wird zu Block 601 weitergegangen. In Block 602 wird der Ziellenkwinkel $\delta_{ziel}$ ermittelt. Anschließend wird in Block 603 das Unterstützungsmoment M ermittelt, welches dem Lenkrad eine Drehrichtung vorgibt, welche zur Fahrzeugstabilisierung führt. In Block 604 wird anschließend abgefragt, ob der Ziellenkwinkel erreicht ist. Lautet die Antwort "Nein", dann wird zum Eingang von Block 602 zurückverzweigt. Dadurch dass die aktuelle Gierrate $\dot\psi$ und die aktuelle Geschwindigkeit $v$ nicht konstant sind, erfolgt eine Neuberechnung des Ziellenkwinkels in jedem Berechnungsschritt. Lautet die Antwort dagegen "Ja", dann endet in Fig. 605 das Verfahren.

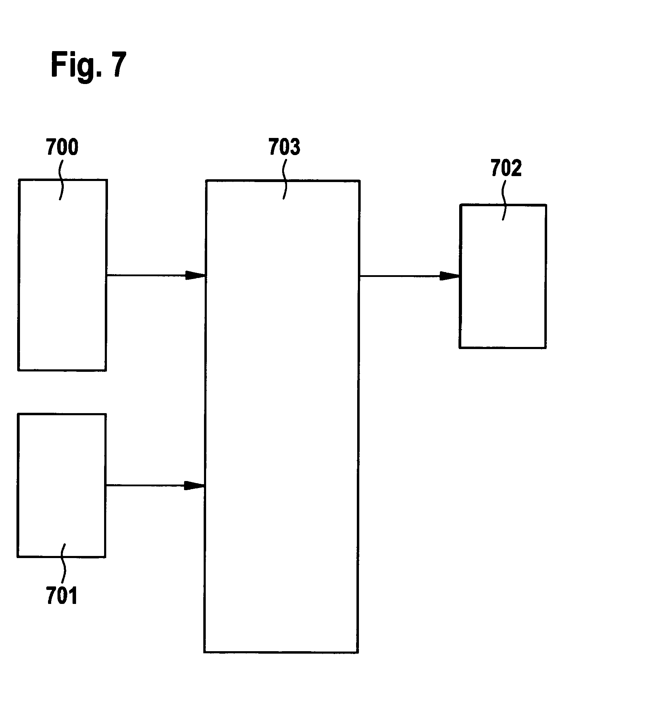

Der Aufbau der erfmdungsgemäßen Vorrichtung ist in Fig. 7 dargestellt. Das Steuergerät 703 enthält Eingangssignale von einem oder mehreren Sensoren 700. Diese erlauben nach Auswertung die Feststellung eines untersteuernden Fahrzustandes. Zugleich erhält das Steuergerät 703 Eingangssignale vom Lenkwinkelsensor 701. Diese Signale können neben dem Lenkwinkel auch weitere Größen wie Lenkwinkeländerungsgeschwindigkeit usw. umfassen. Diese Signale erlauben dem Steuergerät die Erkennung des Fahrerwunsches bzw. der Fahrerreaktion. Abhängig von diesen Eingangssignalen steuert 703 einen oder mehrere Aktoren 702 an, welche das Lenkrad und/oder die Lenkung mit einem Unterstützungsdrehmoment beaufschlagen. Dadurch wird eine haptische Rückmeldung an den Fahrer ermöglicht.

**Patentansprüche**

1. Verfahren zur Stabilisierung eines Fahrzeugs in einem untersteuernden Fahrzustand, bei dem

   - ein Ziellenkwinkel ($\delta_{ziel}$) ermittelt wird,
   - bei einer Lenkbewegung des Fahrers, welche die Differenz zwischen dem aktuellen Lenkwinkel ($\delta_{act\_abs}$) und dem Ziellenkwinkel ($\delta_{ziel}$) vergrößert, ein mit zunehmender Differenz größer werdendes Unterstützungsdrehmoment (M) auf das Lenkrad aufgebracht wird,
   - bei einer Lenkbewegung des Fahrers, welche die Differenz zwischen dem aktuellen Lenkwinkel ($\delta_{act\_abs}$) und dem Ziellenkwinkel ($\delta_{ziel}$) verringert, ein mit abnehmender Differenz kleiner werdendes Unterstützungsdrehmoment (M) auf das Lenkrad aufgebracht wird,
   - wobei das Unterstützungsdrehmoment (M) dem Lenkrad eine Drehrichtung vorgibt und
   - wobei bei einer Drehbewegung des Lenkrads durch den Fahrer in Richtung der vorgegebenen Drehrichtung der Lenkwinkel ($\delta_{act\_abs}$) dem Ziellenkwinkel ($\delta_{ziel}$) angenähert wird.

2. Verfahren nach Anspruch 1, **dadurch gekennzeichnet, dass** es sich

   - bei dem Lenkwinkel ($\delta_{act\_abs}$) um den Radlenkwinkel handelt und
   - bei dem Ziellenkwinkel ($\delta_{ziel}$) um den Zielradlenkwinkel handelt.

3. Verfahren nach Anspruch 1, **dadurch gekennzeichnet, dass** der Lenkwinkel ($\delta_{act\_abs}$) und der Ziellenkwinkel ($\delta_{ziel}$) jeweils auf die Vorderräder bezogen sind.

4. Verfahren nach Anspruch 1, **dadurch gekennzeichnet, dass** der Ziellenkwinkel ($\delta_{ziel}$) wenigstens aus der Fahrzeuggeschwindigkeit und der Giergeschwindigkeit ermittelt wird.

5. Verfahren nach Anspruch 4, **dadurch gekennzeichnet, dass** der Ziellenkwinkel ($\delta_{ziel}$) anhand der Beziehung

$$\delta = \frac{\left(\left(\frac{v}{v_{char}}\right)^2 + 1\right) \cdot \dot{\psi} \cdot l}{v}$$

ermittelt wird, wobei $\dot{\psi}$ die aktuelle Gierrate, $v$ die aktuelle Geschwindigkeit, $v_{char}$ die charakteristische Geschwindigkeit und $l$ der Radstand des Fahrzeugs sind.

6. Verfahren nach Anspruch 1, **dadurch gekennzeichnet, dass** eine Aktivierung des Verfahrens dann stattfindet, wenn

   - ein untersteuernder Fahrzustand des Fahrzeugs festgestellt wird und
   - der Fahrer das Lenkrad derart dreht, dass eine Vergrößerung des Lenkwinkels stattfindet.

7. Verfahren nach Anspruch 1, **dadurch gekennzeichnet,**

   - **dass** das Unterstützungsdrehmoment (M) zum Zeitpunkt der Aktivierung des Verfahrens Null ist und
   - **dass** für den Fall, dass durch die Lenkbewegung des Fahrers die Differenz zwischen dem aktuellen Lenkwinkel ($\delta_{act\_abs}$) und dem Ziellenkwinkel ($\delta_{ziel}$) vergrößert wird, das Unterstützungsdrehmoment (M) mit zunehmender Differenz zwischen dem aktuellen Lenkwinkel ($\delta_{act\_abs}$) und dem zum Zeitpunkt der Aktivierung des Verfahrens vorliegenden Lenkwinkel ($\delta_{start}$) anwächst.

8. Verfahren nach Anspruch 7, **dadurch gekennzeichnet, dass** das Unterstützungsdrehmoment (M) proportional zur Differenz zwischen dem aktuellen Lenkwinkel ($\delta_{act\_abs}$) und dem zum Zeitpunkt der Aktivierung des Verfahrens vorliegenden Lenkwinkel ($\delta_{start}$) anwächst.

9. Verfahren nach Anspruch 7, **dadurch gekennzeichnet, dass** für den Fall, dass beginnend mit dem Zeitpunkt der Aktivierung des Verfahrens

   - in einem ersten Zeitintervall durch die Lenkbewegung des Fahrers die Differenz zwischen dem aktuellen Lenkwinkel ($\delta_{act\_abs}$) und dem Ziellenkwinkel ($\delta_{ziel}$) vergrößert wird und
   - anschließend in einem zweiten Zeitintervall durch die Lenkbewegung des Fahrers die Lenkrichtung geändert wird und die Differenz zwischen dem aktuellen Lenkwinkel ($\delta_{act\_abs}$) und dem Ziellenkwinkel ($\delta_{ziel}$) verkleinert wird,

   das im ersten Zeitintervall aufgebaute Unterstützungsdrehmoment ($M_{act}$) im zweiten Zeitintervall abhängig von der Differenz zwischen dem aktuellen Lenkwinkel ($\delta_{act\_abs}$) und dem Ziellenkwinkel ($\delta_{ziel}$) derart verringert wird, dass bei Erreichen des Ziellenkwinkels ($\delta_{ziel}$) das Unterstützungsdrehmoment ($M_{act}$) verschwindet.

10. Verfahren nach Anspruch 9, **dadurch gekennzeichnet, dass** die Verringerung des Unterstützungsdrehmoments (M) im zweiten Zeitintervall derart erfolgt, dass das Unterstützungsdrehmoment (M) proportional zur Differenz zwischen dem aktuellen Lenkwinkel ($\delta_{act\_abs}$) und dem Ziellenkwinkel ($\delta_{ziel}$) abnimmt.

11. Verfahren nach Anspruch 1, **dadurch gekennzeichnet, dass** eine Deaktivierung des Verfahrens dann stattfindet, wenn der Fahrer das Lenkrad während eines Zeitintervalls vorgegebener Länge entgegen der durch das Unterstützungsdrehmoment (M) vorgegebenen Drehrichtung dreht.

12. Verfahren nach Anspruch 11, **dadurch gekennzeichnet, dass** bei einer Deaktivierung des Verfahrens das bis zum Zeitpunkt der Deaktivierung aufgebaute Unterstützungsmoment derart abgebaut wird, dass sowohl der zeitliche Momentenverlauf (M) als auch der zeitliche Verlauf der Momentenänderung pro Zeiteinheit $\Delta M(k)/\Delta t$ stetige Funktionen der Zeit (t) sind.

13. Vorrichtung zur Durchführung des Verfahrens nach einem der vorhergehenden Ansprüche.


**Claims**

1. Method for stabilizing a vehicle in an understeering driving condition, in the case of which

   - a target steering angle ($\delta_{targ}$) is determined,
   - during a steering movement of the driver which increases the difference between the current steering angle ($\delta_{cur\_abs}$) and the target steering angle ($\delta_{targ}$), an assistance torque (M) which increases with increasing difference is applied to the steering wheel, and
   - during a steering movement of the driver which decreases the difference between the current steering angle ($\delta_{cur\_abs}$) and the target steering angle ($\delta_{targ}$), an assistance torque (M) which decreases with decreasing difference is applied to the steering wheel,
   - the assistance torque (M) prescribing a direction of rotation for the steering wheel, and
   - the steering angle ($\delta_{cur\_abs}$) approaches the target steering angle ($\delta_{targ}$) in the event of a rotary movement of the steering wheel by the driver in the direction of the prescribed direction of rotation.

2. Method according to Claim 1, **characterized in that**

   - the steering angle ($\delta_{cur\_abs}$) is the steer angle, and
   - the target steering angle ($\delta_{targ}$) is the target steer angle.

3. Method according to Claim 1, **characterized in that** the steering angle ($\delta_{cur\_abs}$) and the target steering angle ($\delta_{targ}$) are respectively referred to the front wheels.

4. Method according to Claim 1, **characterized in that** the target steering angle ($\delta_{targ}$) is determined at least from the vehicle speed and the yaw velocity.

5. Method according to Claim 4, **characterized in that** the target steering angle ($\delta_{targ}$) is determined with the aid of the relationship

$$\delta = \frac{\left(\left(\dfrac{\dot{v}}{v_{char}}\right)^2 + 1\right) \cdot \dot{\psi} \cdot l}{v} \; ,$$

$\psi$ being the current yaw rate, $v$ being the current speed, $v_{char}$ being the characteristic speed, and $l$ being the wheel base of the vehicle.

6. Method according to Claim 1, **characterized in that** the method is activated when

    - an understeering driving condition of the vehicle is established, and
    - the driver rotates the steering wheel in such a way that the steering angle is increased.

7. Method according to Claim 1, **characterized**

    - **in that** the assistance torque (M) is zero at the instant of activating the method, and
    - **in that** in the case when the difference between the current steering angle ($\delta_{cur\_abs}$) and the target steering angle ($\delta_{targ}$) is increased by the steering movement of the driver, the assistance torque (M) increases with increasing difference between the current steering angle ($\delta_{cur\_abs}$) and the steering angle ($\delta_{start}$) present at the instant of activating the method.

8. Method according to Claim 7, **characterized in that** the assistance torque (M) increases in proportion to the difference between the current steering angle ($\delta_{cur\_abs}$) and the steering angle ($\delta_{start}$) present at the instant of activating the method.

9. Method according to Claim 7, **characterized in that** in the case when, beginning with the instant of activating the method,

    - in a first time interval the steering movement of the driver increases the difference between the current steering angle ($\delta_{cur\_abs}$) and the target steering angle ($\delta_{targ}$),
    - subsequently, in a second time interval the steering movement of the driver changes the steering direction and reduces the difference between the current steering angle ($\delta_{cur\_abs}$) and the target steering angle ($\delta_{targ}$), and

    in the second time interval the assistance torque ($M_{cur}$) built up in the first time interval is reduced as a function of the difference between the current steering angle ($\delta_{cur\_abs}$) and the target steering angle ($\delta_{targ}$) in such a way that the assistance torque ($M_{cur}$) vanishes when the target steering angle ($\delta_{targ}$) is reached.

10. Method according to Claim 9, **characterized in that** the reduction in the assistance torque (M) in the second time interval is performed in such a way that the assistance torque (M) decreases in proportion to the difference between the current steering angle ($\delta_{cur\_abs}$) and the target steering angle ($\delta_{targ}$).

11. Method according to Claim 1, **characterized in that** the method is deactivated when the driver rotates the steering wheel against the direction of rotation prescribed by the assistance torque (M) during a time interval of prescribed length.

12. Method according to Claim 11, **characterized in that** in the event of a deactivation of the method the assistance torque built up as far as the instant of deactivation is decreased in such a way that both the temporal torque profile (M) and the temporal profile of the change in torque per time unit $\Delta M(k)/\Delta t$ are continuous functions of time (t).

13. Device for carrying out the method according to one of the preceding claims.

**Revendications**

1. Procédé de stabilisation d'un véhicule en état de sous-virage selon lequel,

   - on détermine un angle de braquage cible ($\delta_{ziel}$),
   - pour un mouvement de direction du conducteur qui augmente la différence entre l'angle de braquage actuel ($\delta_{act\_abs}$) et l'angle de braquage cible ($\delta_{ziel}$), on applique au volant un couple d'assistance (M) augmentant avec la différence croissante,
   - pour un mouvement de braquage du conducteur qui diminue la différence entre l'angle de braquage actuel ($\delta_{act\_abs}$) et l'angle de braquage cible ($\delta_{ziel}$), on applique au volant un couple d'assistance (M) qui diminue avec la différence décroissante,
   - le couple d'assistance (M) prédéfinit le sens de rotation du volant, et
   - pour un mouvement de rotation du volant actionné par le conducteur en direction du sens de rotation prédéfini, l'angle de braquage ($\delta_{act\_abs}$) se rapproche de l'angle de braquage cible ($\delta_{ziel}$).

2. Procédé selon la revendication 1,
   **caractérisé en ce que**

   - l'angle de braquage ($\delta_{act\_abs}$) est l'angle de direction de roue, et
   - l'angle de braquage cible ($\delta_{ziel}$) est l'angle de braquage de roue cible.

3. Procédé selon la revendication 1,
   **caractérisé en ce que**
   l'angle de braquage ($\delta_{act\_abs}$) et l'angle de braquage cible ($\delta_{ziel}$) concernent respectivement les roues avant.

4. Procédé selon la revendication 1,
   **caractérisé en ce que**
   l'angle de braquage cible ($\delta_{ziel}$) se détermine au moins à partir de la vitesse du véhicule et de la vitesse de lacet.

5. Procédé selon la revendication 4,
   **caractérisé en ce que**
   l'angle de braquage cible ($\delta_{ziel}$) se détermine selon la formule suivante :

$$\delta = \frac{\left(\left(v/v_{char}\right)^2 + 1\right) . \dot{\psi} . l}{v}$$

dans laquelle $\dot{\psi}$ est la vitesse de lacet actuelle, $v$ est la vitesse actuelle, $v_{char}$ est la vitesse caractéristique et $l$ est l'empattement des roues du véhicule.

6. Procédé selon la revendication 1,
   **caractérisé en ce qu'**
   on active le procédé si :

   - on constate un état de conduite en sous-virage du véhicule, et
   - le conducteur tourne le volant pour augmenter l'angle de braquage.

7. Procédé selon la revendication 1,
   **caractérisé en ce que**

   - le couple d'assistance (M) est nul au moment de la mise en oeuvre du procédé, et
   - au cas où le mouvement de braquage exécuté par le conducteur augmente la différence entre l'angle de braquage actuel ($\delta_{act\_abs}$) et l'angle de braquage cible ($\delta_{ziel}$), le couple d'assistance (M) augmente avec la différence entre l'angle de braquage actuel ($\delta_{act\_abs}$) et l'angle de braquage ($\delta_{start}$) existant au début de l'activation du procédé.

**8.** Procédé selon la revendication 7,
**caractérisé en ce que**
le couple d'assistance (M) augmente proportionnellement à la différence entre l'angle de braquage actuel ($\delta_{act\_abs}$) et l'angle de braquage ($\delta_{start}$) existant au début de l'activation du procédé.

**9.** Procédé selon la revendication 7,
**caractérisé en ce qu'**
au cas où à l'instant de l'activation du procédé :

- dans un premier intervalle de temps, le mouvement de braquage du conducteur augmente la différence entre l'angle de braquage actuel ($\delta_{act\_abs}$) et l'angle de braquage cible ($\delta_{ziel}$), et
- si ensuite dans un second intervalle de temps, le mouvement de braquage du conducteur modifie la direction de braquage et diminue la différence entre l'angle de braquage actuel ($\delta_{act\_abs}$) et l'angle de braquage cible ($\delta_{ziel}$),

on diminue le couple d'assistance ($M_{act}$) établi dans le premier intervalle de temps au cours du second intervalle de temps en fonction de la différence entre l'angle de braquage actuel ($\delta_{act\_abs}$) et l'angle de braquage cible ($\delta_{ziel}$), de façon que lorsqu'on atteint l'angle de braquage cible ($\delta_{ziel}$), le couple d'assistance ($M_{act}$) disparaît.

**10.** Procédé selon la revendication 9,
**caractérisé en ce qu'**
on diminue le couple d'assistance (M) dans le second intervalle de temps de façon que le couple d'assistance (M) diminue proportionnellement à la différence entre l'angle de braquage actuel ($\delta_{act\_abs}$) et l'angle de braquage cible ($\delta_{ziel}$).

**11.** Procédé selon la revendication 1,
**caractérisé en ce qu'**
on neutralise le procédé si pendant un intervalle de temps de durée prédéfini, le conducteur tourne le volant dans la direction opposée au sens de rotation prédéfini par le couple d'assistance (M).

**12.** Procédé selon la revendication 11,
**caractérisé en ce qu'**
en cas de neutralisation du procédé, on diminue le couple d'assistance établi jusqu'à l'instant de la neutralisation de façon qu'à la fois le chronogramme du couple (M) et aussi le chronogramme de la variation de couple par unité de temps $\Delta M(k)/\Delta t$ soient des fonctions continues selon le temps (t).

**13.** Dispositif pour la mise en oeuvre du procédé selon l'une quelconque des revendications précédentes.

## Fig. 1

**100**

USS_inactive

**101**

**105**

**130**

USS_sleep

**110**

**102**

USS_active:

**104**

**103**

USS_turnoff:

**120**

## Fig. 2

**M**

$M_{act}$

**201**

**II**

**I**

$\delta_{ziel}$  $\delta_{start}$  $\delta_{max}$  $[\delta]$

# Fig. 3

# Fig. 4

# Fig. 5

**Fig. 6**

600

601

602 $\delta_{ziel}$

603 M

604

605

## Fig. 7

700

701

703

702